# EUROPÄISCHE PATENTSCHRIFT

(11) **EP 2 727 694 B1**
(45) Veröffentlichungstag und Bekanntmachung des Hinweises auf die Patenterteilung: **28.01.2015**
(21) Anmeldenummer: 12191275.2
(22) Anmeldetag: 05.11.2012
(51) Int. Cl.: B29B 11/16, B29C 70/38, B29C 70/54, B29C 70/30

(54) **Ablegevorrichtung zum gesteuerten Ablegen von Verstärkungsfaserbündeln**
Deposition device for controlled lowering of reinforcement fibre bundles
Dispositif de dépôt pour le dépôt dirigé de faisceaux de fibres de renforcement

(43) Veröffentlichungstag der Anmeldung: 07.05.2014
(73) Patentinhaber: Toho Tenax Europe GmbH, 42103 Wuppertal (DE)
(72) Erfinder: Schneider, Markus, 40237 Düsseldorf (DE); Lehmhaus, Björn, 01445 RADEBEUL (DE)
(74) Vertreter: Schröder, Richard

(56) Entgegenhaltungen:
- JP-A- 2008 254 191
- US-A- 3 810 805
- US-A- 5 866 253
- US-B1- 6 251 185

## Beschreibung

Die vorliegende Erfindung betrifft eine Faserablegevorrichtung zum gesteuerten Ablegen von Verstärkungsfasern auf eine Oberfläche.

Insbesondere im Bereich der Luft- und Raumfahrtindustrie, aber auch z.B. im Bereich des Maschinenbaus oder in der Automobilindustrie, werden in zunehmendem Maße Bauteile aus Faserverbundwerkstoffen eingesetzt. Faserverbundwerkstoffe bieten gegenüber Metall oftmals den Vorteil eines geringeren Gewichts und/oder höherer Festigkeiten. Der Volumenanteil der Verstärkungsfasern und insbesondere auch die Ausrichtung der Verstärkungsfasern haben maßgeblichen Einfluss auf die Belastbarkeit der Bauteile, vor allem im Hinblick auf deren Steifigkeit und deren Festigkeit. Allerdings müssen derartige hochbelastbare Werkstoff und Bauteile dennoch kostengünstig hergestellt werden können, um wirtschaftlich attraktiv zu sein.

Zur Herstellung solcher Verbundwerkstoff-Bauteile werden in einem Zwischenschritt zunächst aus Verstärkungsfasern sogenannte Faservorformlinge ("Preforms") hergestellt. Hierbei handelt es sich um textile Halbzeuge in Form von zwei- oder dreidimensionalen Gebilden aus Verstärkungsfasern, wobei die Form bereits nahezu der Form des endgültigen Bauteils entsprechen kann. Bei Ausführungsformen solcher Faservorformlinge, die im wesentlichen nur aus den Verstärkungsfasern bestehen und bei denen der für die Bauteilherstellung erforderliche Matrixanteil noch zumindest weitgehend fehlt, wird in weiteren Schritten ein geeignetes Matrixmaterial über Infusion oder Injektion, auch unter Anwendung von Vakuum, in den Faservorformling eingebracht. Abschließend erfolgt eine Aushärtung des Matrixmaterials bei in der Regel erhöhten Temperaturen und Drücken zum fertigen Bauteil. Bekannte Verfahren zur Infusion oder Injektion des Matrixmaterials sind hier das sogenannte Liquid Molding (LM-Verfahren) oder damit verwandte Verfahren wie z.B. Resin Transfer Molding (RTM), Vacuum Assisted Resin Transfer Molding (VARTM), Resin Film Infusion (RFI), Liquid Resin Infusion (LRI) oder Resin Infusion Flexible Tooling (RIFT). Das für die Herstellung der Faservorformlinge verwendete Fasermaterial kann auch bereits z.B. mit geringen Mengen eines z.B. aushärtbaren Kunststoffmaterials, d.h. eines Bindermaterials, vorimprägniert sein, um die Fixierung der Verstärkungsfasern im Faservorformling zu verbessern. Derartige vorimprägnierte Garne werden beispielsweise in der WO 2005/095080 beschrieben.

Zur Herstellung von Faservorformlingen aus Verstärkungsfaserbündeln werden vielfach automatisierte Prozesse eingesetzt, bei denen die Faserbündel mittels gesteuerter Ablegeköpfe oder auch Faserablegevorrichtungen auf bzw. in entsprechende Formen abgelegt werden, wobei das Ablegen auch durch Sprühen der Faserbündel auf bzw. in die Formen erfolgen kann. In der Regel wird hierbei den Ablegeköpfen ein Endlosgarn der Verstärkungsfasern zugeführt, welches dann im Ablagekopf bzw. in der Faserablegevorrichtung mittels geeigneter Schneideinrichtungen auf die gewünschte Bündellänge abgelängt wird. Derartige Ablageköpfe mit einer Vorrichtung zum Ablängen von Fasersträngen werden beispielsweise in der WO 2011/045171 oder der US-A 3 011 257 offenbart.

Solche Faservorformlinge können beispielsweise hergestellt werden, indem kurzgeschnittene Verstärkungsfasern zusammen mit einem Bindermaterial auf einen der Gestalt des gewünschten Faservorformlings angepassten luftdurchlässigen Schirm gesprüht und dispergiert und unter Anlegen von Vakuum auf dem Schirm gehalten werden, bis nach Abkühlung des Bindermaterials eine ausreichende Stabilität des Vorformlings erreicht ist. Ein derartiges Verfahren wird beispielsweise in der WO 98/22644 beschrieben. Bei dem Verfahren der WO 98/22644 werden die Verstärkungsfasern vorzugsweise als Kurzschnittfasern in zufälliger, isotroper Anordnung und Ausrichtung angeordnet. Gemäß den Beispielen der WO 98/22644 werden nur Faservolumenanteile im Bereich bis ca. 15 Vol.-% erreicht, und damit wegen der niedrigen Faservolumenanteile nur vergleichsweise geringe dickenbezogene Bauteilfestigkeiten.

Um höhere Faservolumenanteile in Preformen bzw. daraus hergestellten Bauteilen zu erzielen, ist es nach den Ausführungen der WO 2012/072405 von Vorteilen, die Kurzschnittfasern in Form von Bündeln von Verstärkungsfasern abzulegen, wobei die Faserbündel bevorzugt eine Länge im Bereich von 10 bis 50 mm aufweisen. Darüberhinaus ist es mit Blick auf die erzielbaren mechanischen Eigenschaften von Vorteil, wenn die Bündel eine möglichst geringe Anzahl von Verstärkungsfaserfilamenten aufweisen, wobei besonders bevorzugt eine Anzahl von 1000 bis 3000 Filamenten ist. Auf diese Weise entsteht ein nahezu isotroper Werkstoff mit in seinen Erstreckungsrichtungen nahezu isotropen mechanischen Eigenschaften. Gleichzeitig weist dieser Werkstoff wegen der relativ kleinen Bündeldimensionen keine oder nur wenige Bereiche mit erhöhtem Harzanteil und damit reduziertem Verstärkungsfaseranteil auf, die zu Schwachstellen im Bauteil führen können. Es ist leicht einsichtig, dass die Verwendung von Bündeln von Verstärkungsfasern mit derartig geringen Titern, d.h. mit derartig geringen Filamentzahlen, zu erhöhten Kosten sowohl insbesondere auch wegen des Einsatzes relativ hochpreisiger Ausgangsmaterialien führt. Andererseits ist aber die Verwendung grobtitrigerer Faserbündel, d.h. von Faserbündeln mit einer hohen Anzahl von Verstärkungsfaserfilamenten zwar kostengünstiger, jedoch sind, wie ausgeführt, hohe Faservolumenanteile damit nicht oder nur schwer realisierbar.

Dokument JP2008254191 offenbart das Breitlegen und das Schneiden des Strangs in Verstärkungsfaserbündel definierter Länge.

Dokument US3,810,805 offenbart das Schneiden eines Gewebes in einer Längstrennvorrichtung entlang seiner Längserstreckung.

Es besteht daher ein Bedarf nach automatisierbaren Ablegevorrichtungen zum Ablegen von Bündeln aus Verstärkungsfasern zu einem Faservorformling, mittels derer eine kostengünstige Herstellung von Faservorformlingen möglich ist unter Erzielung hoher Faservolumenanteile in den Faservorformlingen bzw. den daraus hergestellten Verbundwerkstoff-Bauteilen.

Daher ist es Aufgabe der vorliegenden Erfindung, eine derartige Vorrichtung zum gesteuerten Ablegen von Verstärkungsfaserbündeln zur Verfügung zu stellen.

Die erfindungsgemäße Aufgabe wird gelöst durch eine Ablegevorrichtung zum gesteuerten Ablegen von Verstärkungsfaserbündeln auf eine Oberfläche, wobei die Ablegevorrichtung
- einen Ablagekopf und eine steuerbare Positionierungseinheit aufweist, mit der der Ablagekopf verbunden ist und mittels derer der Ablagekopf relativ zu der Oberfläche bewegt werden kann,
- wobei die Ablegevorrichtung des Weiteren
   - Mittel zur Bereitstellung mindestens eines endlosen bändchenförmigen Strangs von mit einem Binder versehenen Verstärkungsfasern und
   - eine auf dem Ablagekopf angeordnete erste Fördereinrichtung zum Fördern des mindestens einen endlosen bändchenförmigen Strangs von mit einem Binder versehenen Verstärkungsfasern zum Ablagekopf umfasst,
wobei die Ablagevorrichtung dadurch gekennzeichnet ist, dass
- auf dem Ablagekopf in Förderrichtung gesehen vor der ersten Fördereinrichtung Mittel zum Breitlegen des mindestens einen endlosen bändchenförmigen Strangs angeordnet sind,
- der Ablagekopf eine in Förderrichtung gesehen nach der ersten Fördereinrichtung angeordnete zweite Fördereinrichtung,
- eine zwischen der ersten und der zweiten Fördereinrichtung angeordnete Längstrennvorrichtung mit mindestens einem Trennelement zum Trennen des mindestens einen Strangs von Verstärkungsfasern entlang seiner Längserstreckung in zwei oder mehr Teilstränge und
- eine in Förderrichtung nach der zweiten Fördereinrichtung angeordnete Ablängeinheit zum Ablängen der zwei oder mehr Teilstränge in Faserbündel aufweist.

Mittels der erfindungsgemäßen Vorrichtung ist die Herstellung von Faservorformlingen aus Verstärkungsfaserbündeln mit geringer Anzahl von Verstärkungsfaserfilamenten und damit die Realisierung von hohen Faservolumenanteilen im Faservorformling bzw. dem daraus hergestellten Faserverbundwerkstoff-Bauteil möglich. Hierbei können endlose bändchenförmige Stränge beispielsweise in Form kostengünstiger, grobtitriger Verstärkungsfasergarne als Ausgangsmaterial eingesetzt werden. Solche grobtitrigen Verstärkungsfasergarne können mittels der Längstrennvorrichtung zunächst in mehrere Teilstränge entlang der Erstreckung der die Garne aufbauenden Verstärkungsgarnfilamente getrennt werden, wobei die einzelnen Teilstränge dann eine gegenüber dem Ausgangsgarn reduzierte Anzahl von Filamenten aufweisen.

In einer bevorzugten Ausführungsform weist die Längstrennvorrichtung mehrere Trennelemente auf, mittels derer der der Ablegevorrichtung zugeführte mindestens eine Strang von Verstärkungsfasern in mehr als zwei Teilstränge unterteilt werden kann. Hierdurch lässt sich die Anzahl der Filamente in den einzelnen Teilsträngen weiter reduzieren, womit Faserbündel mit geringerer Breite erhalten werden. Die Verwendung solcher Faserbündel mit geringerer Breite wiederum hat günstige Auswirkungen auf den Faservolumenanteil in dem damit hergestellten Faservorformling bzw. im resultierenden Verbundwerkstoff-Bauteil.

Die erfindungsgemäße Vorrichtung ist insbesondere für die Herstellung und das Ablegen von Faserbündeln aus Verstärkungsfasern wie z.B. Kohlenstoff-, Glas- oder Aramidfasern oder Mischungen dieser Fasern untereinander oder mit thermoplastischen Fasern geeignet.

In der Ablagevorrichtung ist der Ablagekopf mit einer steuerbaren Positionierungseinheit verbunden, mittels derer der Ablagekopf relativ zur Oberfläche bewegt werden kann. In einer Ausgestaltung umfasst die steuerbare Positionierungseinheit einen auf einem Maschinensockel befindlichen Knick-Arm Roboter und ein vom Knick-Arm gehaltenes Robotergelenk, worüber der Ablagekopf in mindestens zwei Achsen relativ zur Oberfläche positionierbar ist. In einer weiteren Ausgestaltung umfasst die steuerbare Positionierungseinheit ein Portalgerüst, in dem der Ablagekopf über einen Gelenkkopf befestigt ist und worüber der Ablagekopf um mindestens zwei Achsen relativ zur Oberfläche positionierbar ist. Vorzugsweise ist der Ablagekopf in mindestens 6 und besonders bevorzugt um mindestens 9 Achsen positionierbar.

Wie ausgeführt, weist die erfindungsgemäße Ablegevorrichtung einen Maschinensockel, einen auf dem Maschinensockel befindlichen Arm und ein von dem Arm gehaltenen und in um mehrere Raumrichtungen Achsen bewegliches Robotergelenk sowie einem mit dem Robotergelenk verbundenen Ablagekopf auf, der mittels des Robotergelenks um mehrere Achsen relativ zu einer Oberfläche bewegt werden kann. Vorrichtungen mit solchen Elementen sind aus dem Stand der Technik bekannt und werden vielfach zum Ablegen von Verstärkungsfaserprodukten auf Oberflächen eingesetzt. Eine Ablegevorrichtung mit den zuvor genannten Elementen wird z.B. in der US-A-5 022 952 zum Ablegen von Verstärkungsfasergarnsträngen beispielsweise zur Herstellung von Wickelkörpern beschrieben. Mittel derartiger Roboter-basierter Vorrichtungen sind beispielsweise Bewegungen des Ablagekopfes in sechs Achsen möglich.

Die erfindungsgemäße Ablegevorrichtung umfasst, wie ausgeführt, Mittel zur Bereitstellung mindestens eines endlosen bändchenförmigen Strangs von mit einem Binder versehenen Verstärkungsfasern. Bei diesen Mitteln kann um eine Aufnahme oder eine Anordnung von Aufnahmen für eine bzw. mehrere Spulen handeln, von denen ein Strang bzw. mehrere Stränge von Verstärkungsfasern spannungskontrolliert abgewickelt oder geschwindigkeitskontrolliert angeliefert werden können. Diese Mittel zur Bereitstellung mindestens eines endlosen Strangs von Verstärkungsfasern können auf dem Maschinensockel oder dem Arm der Ablegevorrichtung montiert sein. Vorzugsweise befinden sich die Mittel zur Bereitstellung des mindestens einen Strangs von Verstärkungsfasern auf dem Ablagekopf und sind mit diesem verbunden. Hierdurch lässt sich in der Anwendung eine besonders gleichmäßige und stabile Zuführung des mindestens einen Strangs von Verstärkungsfasern zu den Mitteln zum Breitlegen des mindestens einen endlosen bändchenförmigen Strangs zur ersten Fördereinrichtung realisieren.

Zur sicheren Positionierung des mindestens einen bändchenförmigen Strangs, zur Erhöhung seiner Breite und des Erzielung eines guten Ergebnisses der Längsschneideinrichtung sind in Förderrichtung des mindestens einen endlosen bändchenförmigen Strangs durch die Ablegevorrichtung gesehen vor der ersten Fördereinrichtung Mittel zum Breitlegen bzw. zum Spreizen des mindestens einen endlosen bändchenförmigen Strangs angeordnet. Hierzu sind einzelne feststehende und/oder drehbar gelagerte Stäbe oder Walzen oder Anordnungen mehrerer Stäbe oder Walzen geeignet, über die die Fadenspannung im Strang erhöht werden kann. Die Oberfläche der Stäbe sollte vorteilhafterweise so beschaffen sein, dass ein Abrieb der über sie geführten Garnstränge gering gehalten wird. Hierfür kann auf bekannte Oberflächen und Materialien zurückgegriffen werden. Die Stäbe sind vorzugsweise so angeordnet, dass der mindestens eine endlose bändchenförmige Strang mit einem Umschlingungswinkel von größer 20° um die Stäbe geführt wird.

Die erfindungsgemäße Ablegevorrichtung weist in einer bevorzugten Ausführungsform Einrichtungen zur seitlichen Führung des mindestens einen endlosen bändchenförmigen Strangs von Verstärkungsfasern auf, so dass dieser gerade und ohne seitliche Ablenkungen durch die einzelnen Förder- und Trennvorrichtungen geführt wird. Hierdurch lässt sich ein sauberer Schnitt in der Längstrennvorrichtung mit sauberen Schnittkanten erzielen, da der Schnitt zumindest weitgehend parallel zu den Filamenten des mindestens einen Strangs erfolgen kann. Bevorzugt sind hierzu Stäbe, Rollen, Walzen oder andere Führungseinrichtungen sowie gegebenenfalls die Fördereinrichtungen rechtwinklig zur Förderrichtung des mindestens einen bändchenförmigen Strangs sowie parallel zueinander ausgerichtet. Darüber hinaus können in einer bevorzugten Ausführungsform Stäbe, Rollen, Walzen und andere Führungselemente, über die der mindestens eine bändchenförmige Strang geführt wird, an den jeweiligen Kontaktstellen mit dem Strang ballig. Bevorzugt weist die Kontur der Führungselemente im Bereich der Balligkeit einen Radius im Bereich von 50 bis 600 mm auf.

In einer Ausführungsform der erfindungsgemäßen Vorrichtung kann diese so ausgelegt sein, dass mehrere endlose bändchenförmige Stränge von mit einem schmelzbaren Binder versehenen Verstärkungsfasern der Vorrichtung vorgelegt werden und in dieser zu Bündeln von Verstärkungsfasern verarbeitet werden können. Dazu umfasst die erfindungsgemäße Vorrichtung vorzugsweise mehrere Einrichtungen zur Führung der einzelnen Stränge von Verstärkungsfasern, so dass die einzelnen Stränge gerade und ohne seitliche Ablenkungen durch die einzelnen Förder- und Trennvorrichtungen geführt werden.

Beim Einsatz der erfindungsgemäßen Ablegevorrichtung zur Herstellung von Verstärkungsfaserbündeln und zum Ablegen dieser Bündel auf eine Oberfläche ist es für den Längs- und den Querschneidprozess (Ablängprozess) günstig, wenn der mindestens eine Strang von Verstärkungsfasern unter Spannung durch die Ablegevorrichtung geführt wird und insbesondere zwischen der ersten und der zweiten Fördereinrichtung ein Spannungsaufbau im mindestens einen Strang von Verstärkungsfasem erfolgt. Hierdurch lässt sich ein sicheres Flachhalten und eine gute Spreizung des mindestens einen Strangs von Verstärkungsfasern und ein stabiler Lauf des mindestens einen Strangs von Verstärkungsfasern erreichen, was insbesondere zu einem guten Schneidergebnis in der Längstrennvorrichtung führt. Daher ist es von Vorteil, wenn die Geschwindigkeiten der der ersten und der zweiten Fördereinrichtung so einstellbar sind, dass die Geschwindigkeit der zweiten Fördereinrichtung höher ist als die der ersten Fördereinrichtung.

Die erste und /oder zweite Fördereinrichtung besteht in einer vorteilhaften Ausführungsform der Ablagevorrichtung aus einer oder mehreren mit einem Antrieb versehenen Rollen oder Walzen, mittels derer der mindestens eine Strang transportiert werden kann. Dabei können die Rollen bzw. Walzen so zueinander angeordnet sein, dass in der Anwendung der mindestens eine Strang von Verstärkungsfasern die Rollen bzw. Walzen umschlingt. In einer weiteren bevorzugten Ausführungsform umfasst die erste und /oder zweite Fördereinrichtung ein angetriebenes und in seiner Geschwindigkeit steuerbares Walzenpaar mit einem zwischen den Walzen des Walzenpaars einstellbaren Walzenspalt, durch den in der Anwendung infolge des durch das Walzenpaar ausgeübten Drucks der mindestens eine Strang von Verstärkungsfasern gefördert wird.

Des Weiteren kann in einer ebenfalls bevorzugten Ausführungsform die erste und/oder zweite Fördereinrichtung eine Gebläseeinrichtung umfassen, mittels derer der mindestens eine endlose bändchenförmige Strang von mit einem schmelzbaren Binder versehenen Verstärkungsfasern befördert werden kann. Hierbei ist die Gebläseeinrichtung mit einer regelbaren Luftzufuhr gekoppelt.

Die Längstrennvorrichtung umfasst mindestens ein Trennelement zum Trennen des mindestens einen Strangs von Verstärkungsfasern entlang seiner Längserstreckung. Bei dem mindestens einen Trennelement der Längstrennvorrichtung kann es sich um mindestens eine Laserstrahl-, eine Luftstrahl oder eine Wasserstrahlanordnung handeln oder um ein mechanisches Trennelement z.B. in Gestalt mindestens eines feststehenden Elements, z.B. um ein feststehendes Messer, oder auch in Gestalt mindestens einer rotierenden Trennscheibe, die mit einem Antrieb versehen ist. Dabei kann der Antrieb regelbar und so ausgelegt sein, dass eine Differenzgeschwindigkeit zwischen der Umfangsgeschwindigkeit der mindestens einen Trennscheibe und der Fördergeschwindigkeit des die Längstrennvorrichtung durchlaufenden mindestens einen Strangs von Verstärkungsfasern einstellbar ist. Die Drehrichtung der mindestens einen rotierenden Trennscheibe kann in Förderrichtung des mindestens einen bändchenförmigen Strangs oder auch entgegengesetzt dazu sein. Dabei hat sich für die Anwendung als vorteilhaft herausgestellt, wenn die Umfangsgeschwindigkeit der mindestens einen Trennscheibe um 2 bis 15 % eingestellt werden kann als die Fördergeschwindigkeit des die Längstrennvorrichtung durchlaufenden mindestens einen Strangs.

In einer bevorzugten Ausführungsform der erfindungsgemäßen Ablegevorrichtung umfasst die Längstrennvorrichtung im Falle, dass das mindestens eine Trennelement ein mechanisches Trennelement ist, einen kraftgesteuerten Niederhalter, mittels dessen das mindestens eine Trennelement und der entlang seiner Längserstreckung zu trennende mindestens eine Strang von Verstärkungsfasern mit definierter Kraft gegeneinander andrückbar sind. Dabei kann z.B. die mindestens eine rotierende Trennscheibe mit einem kraftgesteuerten Niederhalter verbunden sein, mittels dessen die rotierende Trennscheibe mit definierter Kraft gegen den entlang seiner Längserstreckung zu trennenden mindestens einen Strang von Verstärkungsfasern angedrückt wird. Vorzugsweise ist der Niederhalter so angebracht, dass in der Anwendung der Vorrichtung der mindestens eine Strang durch den Niederhalter gegen das mindestens eine mechanische Trennelement gedrückt wird. Mittels eines solchen Niederhalters kann in der Anwendung in Fällen, bei denen der mindestens eine Strang von Verstärkungsfasern eine Drehung aufweist, beispielsweise im Fall, dass der Strang ein Garn ist, eine Garndrehung, ein Trennen des Strangs im Bereich der Drehung quer zur Faserrichtung vermieden werden. Ein bereits teilweises Trennen des Strangs quer zur Faserrichtung kann zu einem Abreißen des Strangs und als Folge zu einer Unterbrechung des Schneid- und damit des Ablege Prozesses führen.

Die Anzahl der Trennelemente der Längstrennvorrichtung richtet sich nach der Anzahl der Stränge von Verstärkungsfasern, die mittels der Längstrennvorrichtung entlang ihrer Längserstreckung geschnitten werden sollen, sowie der Anzahl der Teilstränge, die erhalten werden sollen. Bei Vorlage mehrerer endloser Bändchen förmiger Stränge von mit einem schmelzbaren Binder versehenen Verstärkungsfasern, d.h. mehrerer Stränge von Verstärkungsfasern können diese Stränge so mittels geeigneter Führungseinrichtungen über die erste Fördereinrichtung der Längstrennvorrichtung zugeführt werden, dass sie übereinander angeordnet sind, d.h. aufeinander liegen. In diesem Fall können die bändchenförmigen Stränge zusammen von denselben Trennelementen in Längsrichtung geschnitten werden. Beispielsweise für den Fall, bei dem zwei bändchenförmige Garnstränge in jeweils drei Teilstränge geschnitten werden sollen, weist die Längstrennvorrichtung dann zwei Trennelemente auf.

Vorzugsweise ist die erfindungsgemäße Ablegevorrichtung im Hinblick beispielsweise auf die Mittel zur Bereitstellung sowie auf die Einrichtungen zur seitlichen Führung so ausgelegt, dass bei Zuführung mehrerer Stränge von Verstärkungsfasern diese nebeneinander angeordnet sind. Die Längstrennvorrichtung umfasst dann mehrere Trennelemente, deren Anzahl sich nach der Anzahl der Teilstränge richtet, die aus den nebeneinander angeordneten mehreren Strängen von Verstärkungsfasern hergestellt werden sollen. Beispielsweise weist die Längstrennvorrichtung vier Trennelemente auf, wenn zwei nebeneinander angeordnete bändchenförmige Garnstränge jeweils in drei Teilstränge geschnitten werden sollen.

Das mindestens eine Trennelement kann relativ zu den Einrichtungen zur seitlichen Führung des mindestens einen endlosen bändchenförmigen Strangs von Verstärkungsfasern so angeordnet sein, dass der mindestens eine Strang mittig oder außermittig in Teilstränge unterteilt wird. Ebenso können im Falle eines einzelnen Strangs von Verstärkungsfasern, der in drei oder mehr Teilstränge getrennt werden soll, oder auch im Falle von vorzugsweise nebeneinander angeordneten mehreren Strängen von Verstärkungsfasern die mehreren Trennelemente relativ zueinander und/oder relativ zu den Einrichtungen zur seitlichen Führung so angeordnet werden, dass unterschiedlich breite Teilstränge in der Anwendung der erfindungsgemäßen Ablegevorrichtung resultieren.

Mittels der Ablängeinheit werden die in der Längstrennvorrichtung erhaltenen Teilstränge quer zu ihrer Erstreckungsrichtung zu Faserbündeln definierter Länge geschnitten. In einer bevorzugten Ausführungsform der Ablegevorrichtung ist die Ablängeinheit so mit den Fördereinrichtungen gekoppelt, dass bei Veränderung der Fördergeschwindigkeit die Frequenz des Querschneidens so verändert wird, dass die Länge der resultierenden Verstärkungsfaserbündel gleich bleibt. In einer weiteren bevorzugten Ausführungsform ist die Frequenz des Querschneidens unabhängig von der Fördergeschwindigkeit einstellbar, so dass bei gleichbleibender Fördergeschwindigkeit unterschiedlich lange Verstärkungsfaserbündel herstellbar sind. Natürlich ist auch eine Kombination der Einstellmöglichkeiten von der Erfindung umfasst, bei der zum einen die Fördergeschwindigkeit als Stellgröße für die Frequenz des Querschneidens dient, jedoch bei eingestellter Fördergeschwindigkeit die Frequenz des Querschneidens variiert werden kann.

Hinsichtlich der Ablängeinheit kann auf bekannte Aggregate zum Schneiden von Verstärkungsfasern quer zu ihrer Erstreckungsrichtung zurückgegriffen werden. Als solche Aggregate kommen beispielsweise Aggregate zum Wasser- oder zum Luftstrahlschneiden von Fasern, zum Schneiden von Fasern mittels Laserstrahlen, Aggregate mit z.B. pneumatisch vortreibbaren Schlagmessern quer zur Förderrichtung, Rotationsquerschneider mit Messerwalze und Gegenwalze oder auch Rotationsschneidmesser in Frage, deren Drehachse sich in Förderrichtung der Teilstränge oder in einem Winkel von bis zu 60°, bevorzugt von bis zu 20° dazu erstreckt. Letztere Rotationsschneidmesser werden beispielsweise in der DE 20 2010 017 556 U1 oder der EP-A-2 351 880 A1 offenbart. In einer bevorzugten Ausführungsform wird ein Rotationsquerschneider eingesetzt, bei dem die Messer gegen den zu schneidenden Strang von Verstärkungsfasern gedrückt werden, ohne dass ein wesentlicher Gegendruck auf der anderen Seite des Strangs ausgeübt wird. Diese Vorgehensweise führt bei spröden Verstärkungsfasern, wie z.B. bei Kohlenstofffasern oder bei Glasfasern, zu einem Sprödbruch an der Belastungsstelle und damit zu einem sauberen Ablängen des Strangs von Verstärkungsfasern. Derartige Aggregate werden z.B. in der EP-A-1 144 738, der EP-A-1 394 295, der EP-A-1 723 272 oder der WO 02/055770 beschrieben, auf deren diesbezüglichen Offenbarungsgehalt ausdrücklich Bezug genommen wird.

In einer bevorzugten Ausführungsform weist die Ablegevorrichtung in Förderrichtung nach der Ablängeinheit eine Einrichtung zum Abtransport der Faserbündel auf. Dies kann z.B. ein kurzes Förderband sein. Besonders bevorzugt ist die Einrichtung zum Abtransportieren der Faserbündel ein mit Druckluft beaufschlagbarer Düsenkopf, welcher einen Düsenkanal aufweist, über den die Faserbündel mittels Druckluft der Ablängeinheit entnehmbar und aus dem Düsenkopf austragbar sind. Hierdurch können die Faserbündel mit erhöhter Geschwindigkeit auf eine Oberfläche zur Herstellung eines Faservorformlings ausgetragen, d.h. gesprüht werden. Vorzugsweise ist hierzu im Düsenkanal des Düsenkopfs eine Venturidüse zum Einbringen der Druckluft in den Düsenkanal angeordnet.

In einer weiteren bevorzugten Ausführungsform weist der Düsenkopf Mittel zum Einbringen von Matrixmaterial in den Düsenkanal auf. Bei einer solchen Ausführungsform der erfindungsgemäßen Ablegevorrichtung können die abgelängten Faserbündel zusammen mit einem Matrixmaterial über den Düsenkopf auf eine Oberfläche ausgetragen bzw. gesprüht werden. Die Mittel zum Einbringen von Matrixmaterial können z.B. eine Venturidüse sein, die in den Düsenkanal hineinragt und über die Matrixpartikel in den Düsenkanal eingetragen werden. Es kann sich jedoch auch um eine im Düsenkanal angeordnete Sprühdüse handeln, mittels derer flüssiges Matrixmaterial eingesprüht werden kann. Die Zuführung von Matrixmaterial kann von Vorteil sein, um beim Ablegen der mittels der Ablegevorrichtung hergestellten Faserbündel auf eine Oberfläche durch das Matrixmaterial ein besseres Aneinanderhaften und damit eine bessere Fixierung der Faserbündel untereinander und auf der Oberfläche zu bewirken.

Ebenso kann es im Hinblick auf ein besseres Aneinanderhaften und damit auf eine bessere Fixierung der Faserbündel untereinander und auf der Oberfläche von Vorteil sein, die Faserbündel zu erwärmen, um so den auf den Bündeln befindlichen schmelzbaren Binder zu aktivieren, d.h. in einen Schmelzezustand zu bringen. Nach Auftreffen der Faserbündel auf die Oberfläche des zu erstellenden Faservorformlings und nach Abkühlung werden die Faserbündel über den dann wieder erhärteten Binder fixiert. Zu diesem Zweck weist die erfindungsgemäße Vorrichtung in einer bevorzugten Ausführungsform in Förderrichtung gesehen nach der Ablängeinheit Mittel zum Erhitzen der Faserbündel auf. Als Mittel zum Erhitzen der Faserbündel kommen beispielsweise heiße Gasströme, erwärmte Umgebungsluft, Laserstrahlung, Infrarotstrahlung und dergl. in Frage.

Die erfindungsgemäße Ablegevorrichtung soll nachfolgend anhand der schematischen Darstellungen in den Figuren erläutert werden. Es zeigen:
- Figur 1:: Seitenansicht eines Segments der Ablegevorrichtung mit Ablagekopf.
- Figur 2:: Isometrische Darstellung des Segments der Ablegevorrichtung aus Figur 1.
- Figur 3:: Ablegevorrichtung mit Knick-Arm Roboter

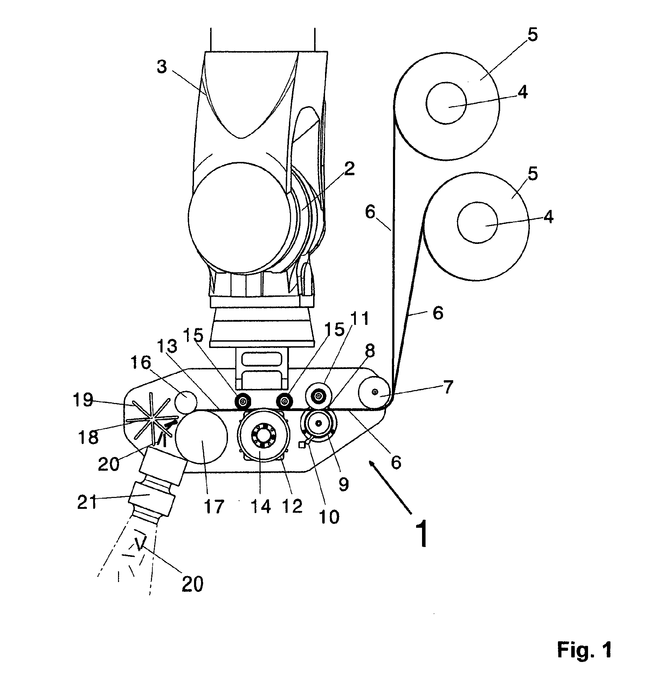

Figur 1 zeigt eine schematische Darstellung eines Segments einer Ablegevorrichtung, bei dem der Ablagekopf 1 über ein Gelenk 2 mit einer steuerbaren Positionierungseinheit 3 verbunden ist. Mit dem Ablagekopf 1 sind vorliegend zwei Vorlagen 4 für Spulen 5, als Mittel zur Bereitstellung der bändchenförmigen Stränge 6 von mit einem Binder versehenen Verstärkungsfasern verbunden, die vorzugsweise mittels Steuermotoren angetriebenen werden können. Die Verbindung zwischen Ablagekopf 1 und Vorlagen kann über geeignete Halterungen erfolgen (hier nicht dargestellt).

Von den auf den Vorlagen befindlichen Spulen 5 werden bändchenförmige Stränge 6 von mit einem Binder versehenen Verstärkungsfasern abgewickelt und um eine Breitlegewalze 7 geführt, die vorzugsweise ballig ausgeführt ist. Mittels der Breitlegewalze 7 werden die Stränge 6 breitgelegt und gegebenenfalls gespreizt. Über die ballige Ausführung der Breitlegewalze 7 kann gleichzeitig eine seitliche Führung der Stränge 6 bewirkt werden.

Von der Breitlegewalze 7 werden die Stränge 6 einer ersten Fördereinrichtung 8 zugeführt, die in der Ablegevorrichtung in Figur 1 aus einem angetriebenen Walzenpaar besteht. Hierbei wird die Unterwalze 9 mittels einer Spannungsvorrichtung 10 gegen die mit einer Gummierung versehene Oberwalze 11 gedrückt, so dass eine Förderung der Stränge 6 ohne Schlupf erfolgen kann.

Nach Durchlaufen der ersten Fördereinrichtung 8 werden die Stränge 6 der Längstrennvorrichtung 12 zugeführt, in der die Stränge 6 längs ihrer Erstreckungsrichtung in Teilstränge 13 geschnitten werden. Hierzu dient eine Anordnung mehrerer rotierender Trennscheiben 14, gegen die die zu trennenden Stränge 6 mittels zweier kraftgesteuerter Niederhalterollen 15 mit definierter Kraft gedrückt werden. Die in der Längstrennvorrichtung 12 erhaltenen Teilstränge 13 werden der ebenfalls als angetriebenes Walzenpaar ausgeführten zweiten Fördereinrichtung 16 zugeführt. Durch Einstellen einer Geschwindigkeitsdifferenz zwischen zweiter Fördereinrichtung 16 und erster Fördereinrichtung 8, bei der die Fördergeschwindigkeit der zweiten Fördereinrichtung 16 geringfügig höher eingestellt wird als die der ersten Fördereinrichtung 8, lässt sich eine definierte Spannung auf die Stränge 6 und die Teilstränge 13 aufbringen, wodurch ein verbessertes Schneidergebnis in der Längstrennvorrichtung 12 erhalten wird.

Die Unterwalze 17 der zweiten Fördereinrichtung 16 dient gleichzeitig als Gegenwalze der im vorliegenden Beispiel als Rotationsquerschneider ausgeführten Ablängeinheit 18, umfassend Messerwalze 19 und Gegenwalze 17. In der Ablängeinheit 18 werden die Teilstränge 13 zu Verstärkungsfaserbündeln bzw. Faserbündeln 20 mit definierter Länge geschnitten. Die abgelängten Faserbündel 20 werden von der Ablängeinheit vom Düsenkopf 21 aufgenommen und über den mit Druckluft beaufschlagten Düsenkanal des Düsenkopfes 21 mit erhöhter Geschwindigkeit auf eine Oberfläche zur Herstellung eines Faservorformlings gesprüht.

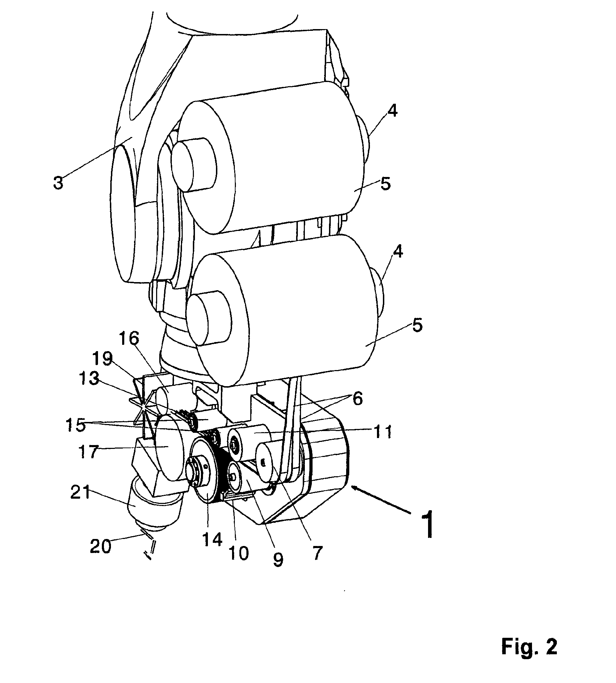

Figur 2 zeigt zur Verdeutlichung der räumlichen Anordnung insbesondere der Elemente des Ablagekopfes das in Figur 1 dargestellte Segment einer Ablegevorrichtung in perspektivischer Darstellung, wobei gleiche Bezugszeichen in den Figuren sich auf gleiche Elemente der Vorrichtung beziehen.

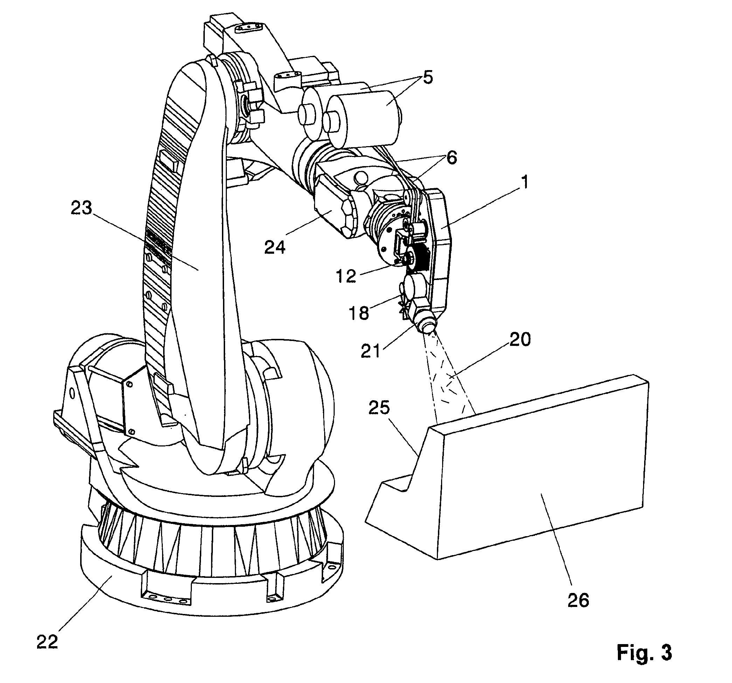

Figur 3 zeigt eine Ausführungsform der erfindungsgemäßen Vorrichtung mit einem auf einem Maschinensockel 22 befindlichen Knick-Arm Roboter 23, an dessen Ende über ein Gelenk 24 der Ablagekopf 1 montiert ist und über den der Ablagekopf in mehreren Achsen relativ zur Oberfläche 25 eines zur Herstellung eines Faservorformlings eingesetzten Formkörpers bewegt werden kann. Hierdurch können die auf dem Ablagekopf 1 mittels der Längstrennvorrichtung 12 und der Ablängeinheit 18 erhaltenen und über den Düsenkopf 21 ausgetragenen Faserbündel 20 entsprechend den Erfordernissen der Struktur des herzustellenden Faservorformlings bzw. des daraus herzustellenden Verbundwerkstoff-Bauteils in definierten Bahnen auf die Oberfläche 25 gesprüht werden.

## Patentansprüche

1. Ablegevorrichtung zum gesteuerten Ablegen von Verstärkungsfaserbündeln auf eine Oberfläche, umfassend
- einen Ablagekopf und eine steuerbare Positionierungseinheit, mit der der Ablagekopf verbunden ist und mittels derer der Ablagekopf relativ zu der Oberfläche bewegt werden kann,
- wobei die Ablegevorrichtung des Weiteren
- Mittel zur Bereitstellung mindestens eines endlosen bändchenförmigen Strangs von mit einem Binder versehenen Verstärkungsfasern und
- eine auf dem Ablagekopf angeordnete erste Fördereinrichtung zum Fördern des mindestens einen endlosen bändchenförmigen Strangs von mit einem Binder versehenen Verstärkungsfasern auf den Ablagekopf umfasst,
**dadurch gekennzeichnet, dass**
- auf dem Ablagekopf in Förderrichtung gesehen vor der ersten Fördereinrichtung Mittel zum Breitlegen des mindestens einen endlosen bändchenförmigen Strangs angeordnet sind,
- der Ablagekopf eine in Förderrichtung gesehen nach der ersten Fördereinrichtung angeordnete zweite Fördereinrichtung aufweist
- der Ablagekopf eine zwischen der ersten und der zweiten Fördereinrichtung angeordnete Längstrennvorrichtung mit mindestens einem Trennelement zum Trennen des mindestens einen Strangs von Verstärkungsfasern entlang seiner Längserstreckung in zwei oder mehr Teilstränge und
- eine in Förderrichtung nach der zweiten Fördereinrichtung angeordnete Ablängeinheit zum Ablängen der zwei oder mehr Teilstränge in Faserbündel aufweist.

2. Ablegevorrichtung nach Anspruch 1, **dadurch gekennzeichnet, dass** die Längstrennvorrichtung mehrere Trennelemente aufweist, mittels derer der mindestens eine Strang von Verstärkungsfasern in mehr als zwei Teilstränge geschnitten werden kann.

3. Ablegevorrichtung nach Anspruch 1 oder 2, **dadurch gekennzeichnet, dass** die erste und/oder zweite Fördereinrichtung aus einer Mehrzahl von Rollen besteht, mittels derer der mindestens eine Strang transportiert werden kann.

4. Ablegevorrichtung nach einem oder mehreren der Ansprüche 1 bis 3,
**dadurch gekennzeichnet, dass** die erste und/oder zweite Fördereinrichtung eine Gebläseeinrichtung umfasst, mittels derer der mindestens eine endlose bändchenförmige Strang von mit einem schmelzbaren Binder versehenen Verstärkungsfasern befördert werden kann.

5. Ablegevorrichtung nach einem oder mehreren der Ansprüche 1 bis 5,
**dadurch gekennzeichnet, dass** das mindestens eine Trennelement der Längstrennvorrichtung eine rotierende Trennscheibe ist.

6. Ablegevorrichtung nach Anspruch 1, **dadurch gekennzeichnet, dass** die Längstrennvorrichtung einen kraftgesteuerten Niederhalter umfasst, mittels dessen das mindestens eine Trennelement und der entlang seiner Längserstreckung zu trennende mindestens eine Strang von Verstärkungsfasern mit definierter Kraft gegeneinander andrückbar sind.

7. Ablegevorrichtung nach einem oder mehreren der Ansprüche 1 bis 6,
**dadurch gekennzeichnet, dass** sie in Förderrichtung nach der Ablängeinheit Mittel zum Erhitzen der Faserbündel aufweist.

8. Ablegevorrichtung nach einem oder mehreren der Ansprüche 1 bis 7,
**dadurch gekennzeichnet, dass** sie in Förderrichtung nach der Ablängeinheit eine Einrichtung zum Abtransport der Faserbündel aufweist.

9. Ablegevorrichtung nach Anspruch 8, **dadurch gekennzeichnet, dass** die Einrichtung zum Abtransport der Faserbündel ein mit Druckluft beaufschlagbarer Düsenkopf ist, welcher einen Düsenkanal aufweist, über den die Faserbündel mittels Druckluft aus dem Düsenkopf austragbar sind.

10. Ablegevorrichtung nach Anspruch 9, **dadurch gekennzeichnet, dass** Düsenkanal eine Venturidüse zum Einbringen der Druckluft in den Düsenkanal angeordnet ist.

11. Ablegevorrichtung nach Anspruch 9 oder 10, **dadurch gekennzeichnet, dass** der Düsenkopf Mittel zum Einbringen von Matrixpartikeln in den Düsenkanal aufweist.

## Claims

1. Deposition device for controlled deposition of reinforcing fiber bundles on a surface, comprising
- a deposition head and a controllable positioning unit which is connected to the deposition head and by means of which the deposition head can be moved relative to the surface,
- wherein the deposition device additionally comprises
- - means for providing at least one continuous, ribbon-shaped strand of reinforcing fibers provided with a binder, and
- - a first conveying device arranged on the deposition head for conveying the at least one continuous, ribbon-shaped strand of reinforcing fibers provided with a binder onto the deposition head,
**characterized in that**
- means for spreading the at least one continuous, ribbon-shaped strand are arranged on the deposition head in front of the first conveying device when viewed in the conveying direction,
- the deposition head has, when viewed in the conveying direction, a second conveying device arranged after the first conveying device,
- the deposition head has a longitudinal splitting device arranged between the first and second conveying devices and having at least one splitting element for splitting the at least one strand of reinforcing fibers along the longitudinal extension thereof into two or more partial strands, and
- a cut-to-length unit arranged after the second conveying device in the conveying direction for cutting-to-length the two or more partial strands into fiber bundles.

2. Deposition device according to Claim 1, **characterized in that** the longitudinal splitting device has multiple splitting elements, by means of which the at least one strand of reinforcing fibers can be cut into more than two partial strands.

3. Deposition device according to Claim 1 or 2, **characterized in that** the first and/or second conveying device consists of a plurality of rollers, by means of which the at least one strand can be transported.

4. Deposition device according to one or more of Claims 1 to 3, **characterized in that** the first and/or second conveying device comprises a blowing device, by means of which the at least one continuous, ribbon-shaped strand of reinforcing fibers provided with a fusible binder can be conveyed.

5. Deposition device according to one or more of Claims 1 to 4, **characterized in that** the at least one splitting element of the longitudinal splitting device is a rotating splitting disk.

6. Deposition device according to Claim 1, **characterized in that** the longitudinal splitting device comprises a force-controlled hold-down device, by means of which the at least one splitting element and the at least one strand of reinforcing fibers to be split along the longitudinal extension thereof can be pressed against each other with a defined force.

7. Deposition device according to one or more of Claims 1 to 6, **characterized in that** it has means for heating the fiber bundles after the cut-to-length unit in the conveying direction.

8. Deposition device according to one or more of Claims 1 to 7, **characterized in that** it has a device for transporting the fiber bundles away after the cut-to-length unit in the conveying direction.

9. Deposition device according to Claim 8, **characterized in that** the device for transporting the fiber bundles away is a nozzle head that can be pressurized with compressed air, which nozzle head has a nozzle channel via which the fiber bundles can be carried away from the nozzle head by means of compressed air.

10. Deposition device according to Claim 9, **characterized in that** a Venturi nozzle is arranged in the nozzle channel for introducing the compressed air into the nozzle channel.

11. Deposition device according to Claim 9 or 10, **characterized in that** the nozzle head has means for introducing matrix particles into the nozzle channel.

## Revendications

1. Dispositif de dépôt destiné à déposer de façon commandée des faisceaux de fibres de renforcement sur une surface, comprenant :
- une tête de dépôt et un ensemble de positionnement susceptible d'être commandé, auquel est reliée la tête de dépôt et au moyen de duquel la tête de dépôt peut être déplacée par rapport à la surface,
- le dispositif de dépôt comprenant en outre
- des moyens destinés à la préparation d'au moins un brin continu en forme de bandelette de fibres de renforcement dotés d'un liant, et
- un premier dispositif de transport disposé sur la tête de dépôt, destiné à amener sur la tête de dépôt le brin continu en forme de bandelette, au nombre d'au mois un, constitué de fibres de renforcement dotées d'un liant,
**caractérisé en ce que**
- des moyens de mise à plat du brin continu en forme de bandelette sont disposés sur la tête de dépôt, en amont du premier moyen de transport, vu dans la direction de transport,
- la tête de dépôt présente un deuxième dispositif de transport disposé en aval du premier dispositif de transport, vu dans la direction de transport
- **en ce que** la tête de dépôt présente, disposé entre le premier et le deuxième dispositif de transport un dispositif de séparation longitudinale comportant au moins un élément de séparation destiné à séparer le brin de fibres de renforcement, au nombre d'au mois un, le long de son étendue longitudinale en deux ou plusieurs brins partiels et
- présente un ensemble de mise à longueur disposé en aval du dispositif de transport destiné à mettre à longueur des deux ou plusieurs brins partiels en faisceaux de fibres.

2. Dispositif de dépôt selon la revendication 1 **caractérisé en ce que** le dispositif de mise à longueur présente plusieurs éléments de séparation au moyen desquels le brin de fibres de renforcement, au nombre d'au mois un, peut être coupé en plus de deux brins partiels.

3. Dispositif de dépôt selon la revendication 1 ou 2 **caractérisé en ce que** le premier et/ou le deuxième dispositif de transport est constitué d'une pluralité de rouleaux au moyen desquels le brin au minimum unique peut être transporté.

4. Dispositif de dépôt selon une ou plusieurs des revendications 1 à 3 **caractérisé en ce que** le premier et/ou le deuxième dispositif de transport comprend un dispositif de soufflerie au moyen duquel le brin continu en forme de bandelette, au nombre d'au mois un, de fibres de renforcement dotées d'un liant peut être transporté.

5. Dispositif de dépôt selon une ou plusieurs des revendications 1 à 4 **caractérisé en ce que** l'élément de séparation du dispositif de séparation longitudinal est un disque de séparation rotatif.

6. Dispositif de dépôt selon la revendication 1 **caractérisé en ce que** le dispositif de séparation longitudinale comprend un élément de maintien vers le bas commandé mécaniquement au moyen duquel l'élément de séparation, au nombre d'au mois un, et le brin de fibres de renforcement, au nombre d'au mois un, qu'il s'agit de séparer le long de son étendue longitudinale peuvent être appliqués l'un contre l'autre en étant soumis à une pression d'une force définie.

7. Dispositif de dépôt selon une ou plusieurs des revendications 1 à 6 **caractérisé en ce qu'**en aval de l'ensemble de mise à longueur dans la direction de transport il présente des moyens de chauffage des faisceaux de fibres.

8. Dispositif de dépôt selon une ou plusieurs des revendications 1 à 7 **caractérisé en ce qu'**en aval de l'ensemble de mise à longueur dans la direction de transport il présente un dispositif d'évacuation des faisceaux de fibres.

9. Dispositif de dépôt selon la revendication 8 **caractérisé en ce que** le dispositif d'évacuation des faisceaux de fibres est une tête de buse susceptible d'être soumise à de l'air comprimé, laquelle présente un canal de buse par l'intermédiaire duquel les faisceaux de fibres peuvent être éjectés hors de la tête de buse au moyen d'air comprimé.

10. Dispositif de transport selon la revendication 9 **caractérisé en ce qu'**une buse du type Venturi est disposé dans le canal de buse en vue de l'introduction de l'air comprimé dans le canal de buse.

11. Dispositif de dépôt selon la revendication 9 ou 10 **caractérisé en ce que** la tête de buse présente des moyens d'introduction de particules de matrice dans le canal de buse.
